# EUROPÄISCHE PATENTANMELDUNG

(11) **EP 3 043 414 A1**
(43) Veröffentlichungstag der Anmeldung: **13.07.2016**
(21) Anmeldenummer: 15450001.1
(22) Anmeldetag: 09.01.2015
(51) Int. Cl.: H01M 10/44, H01M 10/06

(54) **Intelligentes stromloses Wiederaufladeverfahren**

(71) Anmelder: Hassan, Anour, 1180 Vienna (AT)
(72) Erfinder: Hassan, Anour, 1180 Vienna (AT)

(57) **Zusammenfassung**

Bei der Erfindung handelt es sich um ein SCCS - intelligentes stromloses Wiederaufladeverfahren - in den Gebieten der Quantenmechanik, Quantenelektrodynamik und Elektrochemie, bei welchem durch neue Erkenntnisse und Konfigurationen in wiederaufladbaren Batterien mittels eines neu entwickelten Regel-, Mess- und Steuergerätes von photovoltaischen und thermovoltaischen Energiequellen auf eine neue Art und Weise ein voller Ladezustand hergestellt werden kann.

## Beschreibung

### 3 Beschreibungseinleitung:

Wir beziehen uns mit dieser Erfindung auf das technische Gebiet der regenerativen und alternativen Energiegewinnung sowie der Wiederverwertung jeglicher Abwärmetechnologien in der Form von nutzbarer elektrischer Leistung und der Speicherung selbiger in aufladbaren Speicherbatterien. In diesen geschieht das Aufladen durch einen elektrochemischen Prozess. So führen in den nutzbaren Energiequellen, sei diese photovoltaischen oder thermovoltaischen Ursprungs, einerseits Photonenabsorbtion und andererseits durch Aufnahme der Wärmeenergie Atomgitterschwingungen und damit Quasiteilchen "Phononen" zu einer Absorption der Energie auf quantenmechanischer, elektrodynamischer Ebene mit quantenphysikalischen Eigenschaften. Durch das von uns entwickelten Cold Charging Verfahren und den dazugehörigen RMS - **R**egelungs-, **M**ess- und Steuerungsfunktion als Hauptverbindungsglied zwischen photovoltaischen und/oder thermovoltaischen Energiequellen und wiederaufladbaren Batterien "als Energiepuffer" ist **erstmalig eine stromlose (I = 0A) Wiederaufladefunktion** realisiert.

### 4 Stand der Technik:

Alle auf dem Markt befindlichen photo-/thermovoltaischen Generatoren in Verbindung mit Verbrauchern, bzw. Batteriespeichern, unterliegen dem Ohm'schen Gesetz und dessen Bedingungen. Das bedeutet, dass der Elektronenstrom die Energiequelle und auch den Verbraucher, respektive Batteriespeicher, durchfließen muss und dabei folgende Effekte zur Folge hat:
4.1 Leistungsverluste durch steigendes Erwärmungspotential und sich verringernde MPP (Maximum Power Point)
4.2 Leistungsverluste durch steigende Innen- (R_{I}) und Außen- (R_{A}) widerstände und daraus resultierenden steigenden ΔU Spannungsabfall
4.3 Leistungsverluste in PV-Anlagen durch Kontaktfehler oder Teil-Schattierungen, die bis zu sogenannte Hot Spots führen können und in einzelnen Fällen bereits Brände ausgelöst haben.
4.4 Leistungsverluste in PV-Anlagen aufgrund diffuser Lichtsituationen.

### 5 Aufgabe der Erfindung:

Im Gegensatz zum Aufladestromfluss in einem geschlossenen Kreis nach dem Stand der Technik wird aufgrund der erfolgreichen Forschungsergebnisse im Bereich der Quantenmechanik / Elektrodynamik mittels der Erfindung SCCS - intelligentes stromloses Wiederaufladeverfahren - zwischen einer photovoltaischen, respektive einer thermovoltaischen, Spannungsquelle und einer oder mehreren Speicherbatterie(n) als Last diese neuartige nicht dem Ohm'schen Gesetz unterliegende Ladefunktion ermöglicht, mittels des dazugehörigen und neu-entwickelten CC **C**old **C**harging Controllers mit den Hauptfunktionen **R**MS - **R**egelung, **M**essung, **S**teuerung. Der Gegenstand der Erfindung SCCS - intelligentes stromloses Wiederaufladeverfahren - ermöglicht eine Synchronisation der quantenelektrodynamischen Elementarbewegungen der Ladungsträger in der Energiequelle mit den elementaren Ionenbewegungen im elektrochemischen Verfahren in einer oder mehreren Speicherbatterie(n) in einem offenen Kreis.

### 6 Lösung der gestellten Aufgabe:

Bei herkömmlichem Energietransfer in der Photovoltaik entsteht ein negativer Effekt in Form einer Spannungspotentialreduktion und daraus resultierender MPP-Leistungsminderung aufgrund Erwärmung und verstärkten phononenbildungsinduzierten atomaren Gitterschwingungen. Durch den Einsatz des SCCS - intelligentes stromloses Wiederaufladeverfahren - Verfahrens wird dieser Effekt umgekehrt und diese durch Phononenbildung bedingten auf atomarer und molekularer Ebene entstehenden Gitterschwingungen als zusätzliche Erregungsenergie nutzbar gemacht.

Nach dem Stand der Technik beschränkt sich in der Photovoltaik die Energieausbeute durch Photonenabsorbtion und die spezifischen dynamischen und physikalischen Eigenschaften der "Exitonen", die in p/n Raumladungszonen in Elektronen und Löcher getrennt werden. Durch die neuen Erkenntnisse im Bereich der Quantenmechanik / Elektrodynamik wird eine zusätzliche Energietransformation in den photovoltaischen Energiequellen auf Basis der zu Phononenbildung führenden Wärmeabsorbtion ermöglicht. Der Mechanismus dahinter funktioniert analog der herkömmlichen Ladungsträgersituation (Elektronen und Löcher-Paare, wo die Bindung aufgelöst wird und die energetisierten frei-gewordenen Ladungsträger in gegensätzliche Richtung bewegt werden) und unterstützt diese zusätzlich im Sinne höherer Ausbeute und schnellerer Wandlungsrate der durch die nunmehr verstärkende Funktion der absorbierten Wärmeenergie. Somit werden Infrarot- Anteile als Bestandteile dieses Energietransformationsprozesses integriert und führen zu einer vom Stromdurchfluss-befreiten höher energetisierten Ladungsträgerquantität.

Analog dazu funktioniert diese Verfahren im Bereich der Wärmeabsorption und Phononenbildung in den thermovoltaischen Anlagen der p/n Übergangszonen bzw. Grenzschicht zwischen 2 Metallen - unter Ausnutzung des eigentlichen Seebeckeffekts - für rein thermovoltaische Anwendungen.

Durch das SCCS - intelligentes stromloses Wiederaufladeverfahren - konnten wir die Ionenstrombewegung des elektrochemischen Prozesses (negativ geladene Anionen und/oder positiv geladene Kationen) in wiederaufladbaren Batterien mittels der CC Cold Charging Funktion und dem als Protoyp bereits entwickelten, gebauten, getesteten voll funktionsfähigen RMS Gerät zur **R**egelung, **M**essung, **S**teuerung, mit der Bewegung der höher energetisierten Ladungsträgerquantität in der jeweiligen Quelle synchronisieren.

### 7 Effekte der Erfindung:

Mittels der Erfindung des SCCS - intelligentes stromloses Wiederaufladeverfahren - von photovoltaischen und thermovoltaischen (regenerativen wie herkömmlichen) Energiequellen in Speicherbatterien - sind wichtige technische, wirtschaftliche und volkswirtschaftliche Effekte realisiert und realisierbar, wie:

### 7.1 Technische Effekte:

7.1.1 Das SCCS - Intelligente stromlose Wiederaufladeverfähren - unterliegt nicht dem Ohmschen Gesetz
7.1.2 Durch SCCS wird die Anzahl der wiederaufladbaren Batteriespeicher gegenüber herkömmlichem Leistungstransfer vervielfacht
7.1.3 Die durchschnittliche Ladegeschwindigkeit von der Quelle in die wiederaufladbaren Batteriespeicher und Batteriespeichersysteme wird erhöht
7.1.4 Der Wiederaufladeprozess wird sicherer gestaltet
7.1.5 Keine zusätzliche stromabhängige Wärmeentwicklung in Spannungs-Quellen
7.1.6 Reduzierung der Notwendigkeit von großen Querschnitten in Ladekabeln
7.1.7 Bei mit SCCS - Intelligentes stromloses Wiederaufladeverfahren - betriebenen Anlagen entsteht kein Spannungsabfall ΔU = I x R = 0 bei (der) Spannungsquelle(n), somit entspricht die Leerlaufspannung V_{0C} der Spannung bei maximaler Leistung Vₚₘ nach dem Stand der Technik
7.1.8 In photovoltaischen Anwendungen werden die eigentlich negativen Auswirkungen der inhärenten Wärmeabsorbtion umgekehrt und wirken nun im positiven Sinne als Energietransformationsverstärkung in Richtung der wiederaufladbaren Batteriespeicher
7.1.9 In den photovoltaischen Generatoren wird die Brandgefahr durch Kontaktfehler oder Hotspot Bildung durch die SCCS inhärente I = 0 Ampere Funktion vermieden
7.1.10 In den photovoltaischen Generatoren werden Leistung und Wirkungsgrade durch die Reduktion der Verluste erhöht
7.1.11 Photovoltaische Generatoren liefern auch angemessen Leistung bei diffuser Lichtsituation
7.1.12 Photovoltaische Generatoren liefern auch angemessen Leistung bei Schattierung oder Teilschattierung
7.1.13 In den Speicherbatterien findet die Wiederaufladefunktion ohne zusätzliche ladestromanhängige Wärmeentwicklung statt
7.1.14 Bei mit SCCS - Intelligentes stromloses Wiederaufladeverfahren - betriebenen Anlagen findet Ladungsträgerbewegung nur mehr in der photovoltaischen und thermovoltaischen Energiequelle in Form von Elektronen, Elektronenlöchern (defekte Elektronen) und in den Batteriespeichern in Form von Ionenbewegung statt. Hingegen wird diese negative Ladungsträgerbewegung (Elektronen = physikalischer Strom) in der äußeren Verbindung zwischen Energiequelle(n) und Speicherbatterie(n) nicht mehr benötigt, infolge dessen besteht kein Bedarf nach Laderegelung nach dem bisherigen Stand der Technik.
7.1.15 Das SCCS - Intelligente stromlose Wiederaufladeverfahren - stellt sich bei Erreichen des Volladestatus in wiederaufladbaren Batteriespeichern automatisch ruhend - das Erreichen des Volladestatus wird erreicht, wenn die beiden Pole der wiederaufladbaren Batteriespeicher entsulfatisiert sind und der optimale Elektrolytdichtestand bei Volladungszustand erreicht ist.
7.1.16 Das SCCS - Intelligente stromlose Wiederaufladeverfahren - funktioniert mit auf Lithium-basierten wiederaufladbaren Batterien und ermöglicht eine stromlose Wiederaufladung durch Synchronisation der Ladungsträgerbewegung in der Quelle mit der Ladungsträgerbewegung im Elektrolyt der Lithium-basierten Batterien.
   Dort entsteht im Elektrolyt eine umkehrbare Bewegung positiv geladener Ionen (Li⁺-Kathionen) im Aufladeprozess, die von der Anode in Richtung der Kathode fließen. Der "volle" Ladezustand der Batterie wird erreicht, wenn das aktive Material an der Kathode, gewöhnlich aus Graphit bestehend, eine möglichst hohe Zahl an Ionen aufgenommen und die "maximale" Energiedichte erreicht hat, wobei sich das SCCS bei Erreichen dieser Maximalenergiedichte ruhend stellt. Im Entladeprozess fließen nun die Li⁺-Kathionen von der Kathode zur Anode.
7.1.17 Mittels SCCS - Intelligente stromlose Wiederaufladeverfahren - kann eine Erhöhung der Lebenserwartung von Batteriespeichern durch Erhöhung der möglichen Ladezyklen erreicht werden.
7.1.18 In den Speicherbatterien wird durch das SCCS eine Aufladung ohne Überspannung ermöglicht, daher werden Erhitzungs-, Gasungs- und Explosionsgefahren unterbunden. Gleiches gilt für Defekte wie Einzelzellenkurzschluß.

### 7.2 Wirtschaftliche Effekte:

7.2.1 Günstigere Anschaffungskosten von PV-Anlagen durch die Leistungserhöhung der PV-Generatoren (Module) und gleichzeitige Erhöhung der Erntekapazität bei gleichzeitiger Verminderung der Verlustpotentiale
7.2.2 Erhöhung der Lebenserwartung von PV-Generatoren
7.2.3 Erhöhung der Lebenserwartung von Batteriespeichern und Erhöhung der möglichen Ladezyklen
7.2.4 Der CC Cold Charging Controller mit den Hauptfunktionen RMS - Regelung, Messung, Steuerung, in den das SCCS Verfahren integriert ist, ist äußerst platzsparend und wartungsfreundlich.
7.2.5 Der CC Cold Charging Controller wird mit niedrigen Anschaffungskosten zur Verfügung stehen und ist extrem kosteneffizient im Betrieb sein
7.2.6 Durch die Integration von CC Cold Charging Controller und SCCS in eine PV-Anlage werden zur Erreichung der gewünschten Leistung weniger PV-Module benötigt.
7.2.7 Die Erweiterung einer bestehenden photovoltaischen Anlage um das SCCS - Intelligente stromlose Wiederaufladeverfahren - kann innerhalb einer Arbeitsstunde erfolgen.
7.2.8 Die äußerst effiziente Dimensionierung des CC Cold Charging Controllers mit der Bemaßung von L*B*H = 150 * 150 * 80 mm mit 0,98 KG erlaubt eine einfache Integration in jegliche photovoltaische oder thermovoltaische Anlage.

### 7.3 Volkswirtschaftliche Effekte:

7.3.1 Günstigste Batteriespeicher können in das mit dem CC Cold Charging Controller mit den Hauptfunktionen RMS - Regelung, Messung, Steuerung - integrierte PV/Speichersystem installiert werden, wodurch eine lokale günstige über den Hausgebrauch nötige Speicherfunktion gegeben ist, welche an das Netz abgegeben werden kann.
7.3.2 Die dezentralisierte Speicherung in breiter Masse in "relativ kleinen Speichereinheiten" ermöglicht eine höhere Netzsicherheit und Demand/Response-Steuerung für Netzbetreiber im Rahmen der Smart-Grid-Umsetzungsvorhaben.
7.3.3 Durch die Lieferung von elektrischer Energie (in für den Betreiber Netz-synchronisierter Frequenz) verringern sich die sonst mit PV on grid einhergehenden Probleme für die Netzbetreiber
7.3.4 Bei langfristig ausreichender Umsetzung dieses Konzeptes entfällt auch die Vorhaltenotwendigkeit von einzelnen Fossil-basierten Kraftwerken, respektive kann die rotierende Masse sukzessive reduziert werden.

### 8 Aufzählung der Kurzbeschreibung der Zeichnungsfiguren:

- FIG 1: zeigt schematisch den Ladungsträger-Funktionsablauf einerseits in der PV-Zelle/Modul und andererseits und auch in wiederaufladbaren Batterien in den jeweiligen Lade- und Entladevorgängen nach dem Stand der Technik.
- FIG 2: zeigt schematisch einen Ladungsträger-Funktionsablauf in der PV-Zelle/Modul in Verbindung mit einem herkömmlichen Solarladeregeler mit einer Speicherbatterie samt Entladefunktion in Richtung Verbraucher (Last) nach dem Stand der Technik.
- FIG 3: zeigt schematisch den Ladungsträger-Funktionsablauf in der PV-Zelle/Modul beim SCCS - stromloses Wiederaufladungsverfahren - durch CC Cold Charging Controller und zweireihige Speicherbatterien (anstelle von einreihigen Batterien wie in FIG 2 dargestellt) im Auflademodus.
- FIG 4: zeigt schematisch einen Ladungsträger-Funktionsablauf in der PV-Zelle/Modul beim SCCS - Intelligente stromlose Wiederaufladeverfahren - durch CC Cold Charging Controller und 2reihige Speicherbatterien (anstelle von 1reihigen Batterien wie in FIG 2 dargestellt) im Entlademodus.
- FIG 5: zeigt schematisch den Aufbau von Komponenten in dem CC Cold Charging Controller mit den Hauptfunktionen RMS - Regelung, Messung, Steuerung
- FIG 6: zeigt schematisch die Dimensionen von L*B*H = 150 * 150 * 80 mm mit 0,98 KG des CC Cold Charging Controllers mit den Hauptfunktionen Regelung, Messung, Steuerung (RMS)

### 9 Aufzählung der Kurzbeschreibung der Zeichnungsfiguren:

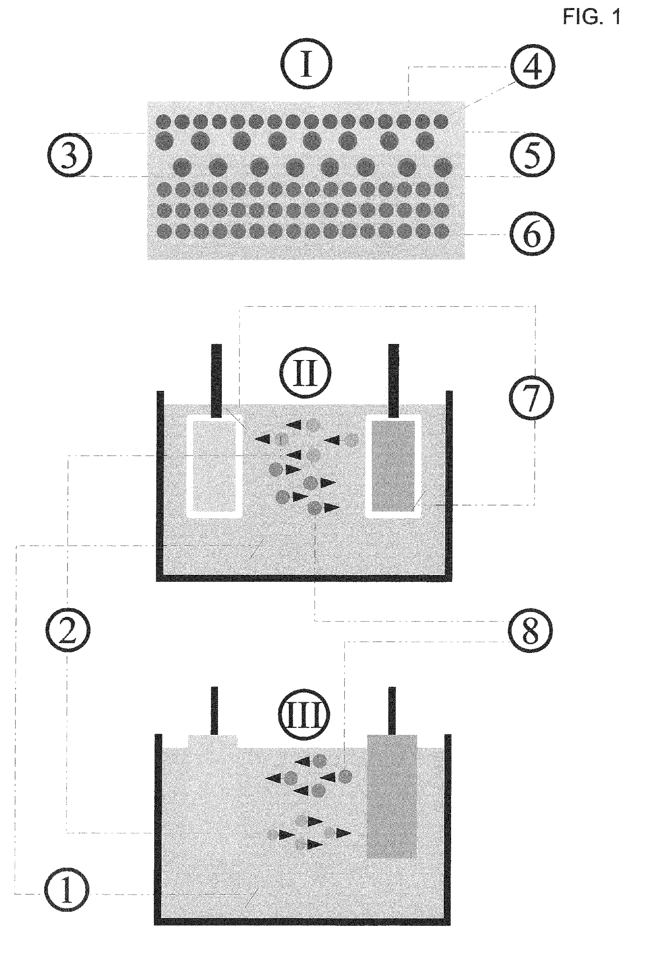

- FIG 1 - Figur 1:: zeigt schematisch nach dem Stand der Technik, wie sich die Ladungsträgerbewegungen und die dazugehörigen Funktionsabläufe nach quantenmechanischen und elektrodynamischen Regeln verhalten:
- Figur 1.1:: Die Energiequelle [I] stellt eine PV-Photovoltaik Zelle/Modul dar. In der Raumladungszone ist der p/n Übergang [5] eigentlich die treibende Kraft oder der Motor des Solargenerators. Trifft ein Licht-Quanten-Photon in der Raumladungszone [5] auf ein sich darin befindliches Elektron/Loch-Paar-Exiton [3] (blau mit roter Umrandung, löst sich das Elektron und bewegt sich Richtung n-dotierter Schicht [4] und das positive Restatom-Loch bewegt sich scheinbar in Richtung der p-dotierten Schicht [6] - tatsächlich finden also Elektronensprünge zwischen Löchern und benachbarten Atomen statt. Dadurch entstehen Landungstrennung und dazugehörige Spannung. Beim Stand der Technik ist dieser Elektronstrom in einem geschlossenen Kreis irreversibel in einer Richtung orientiert von dem n-Schicht-Minuspol über die Batterie(n)[Verbraucher zum p-Schicht-Pluspol.
- Figur 1.II:: In einer entladenen Speicherbatterie [II] sind die beiden Pole [positiv = orange] [negativ = blau] bereits sulfatisiert, symbolisiert durch die weiße Umrandung [7]. Durch den elektrochemischen Prozess der Aufladung in dem elektrolytischen Medium, wobei mit Einwirkung des internen umkehrbaren Ionenstroms negativ geladene Anionen [2] und positiv geladene Kathionen [8] gebildet werden.
- Figur 1.III:: In der geladene Speicherbatterie [III] sind die beiden Pole [positiv = orange] [negativ = blau] entsulfatisiert durch Ablösung der sulfatischen Anlagerungen an den Polen unter Einwirkung des internen umkehrbaren Ionenstroms samt den negativ geladene Anionen [2] und positiv geladene Kathionen [8], die nun beim Entladeprozess in gegen gesetzter Richtung zur Aufladungsfunktion fließen.

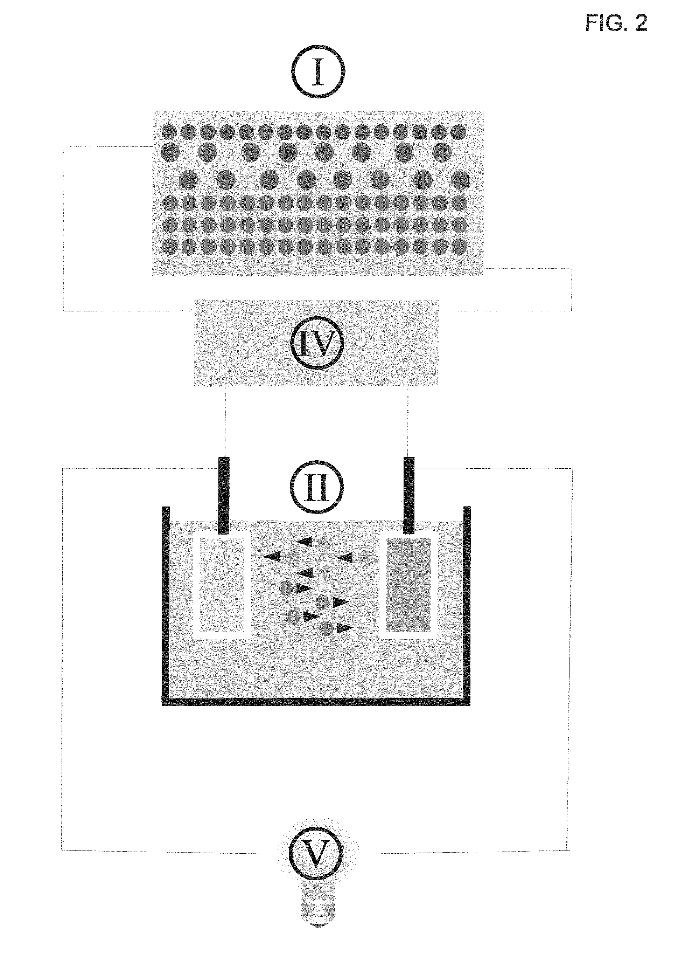

- FIG 2 - Figur 2:: zeigt schematisch nach dem Stand der Technik bei angeschlossener Photovoltaik-Zelle / Modul [I] wie mittels Laderegler [IV] eine (oder auch mehrere) Speicherbatterien [II] und ein Verbraucher (im Sinne der Last) [V] miteinander verbunden sind - im Auflademodus. Die Elektronenstromflussrichtung von PV-Zelle / Modul [I] geht über den negativen Anschluss (-) aus dem PV-Modul hinaus und über den positiven Anschluss (+) zurück. Diese Betriebsmodus nach dem Stand der Technik unterliegt natürlich dem Ohm'schen Gesetz.

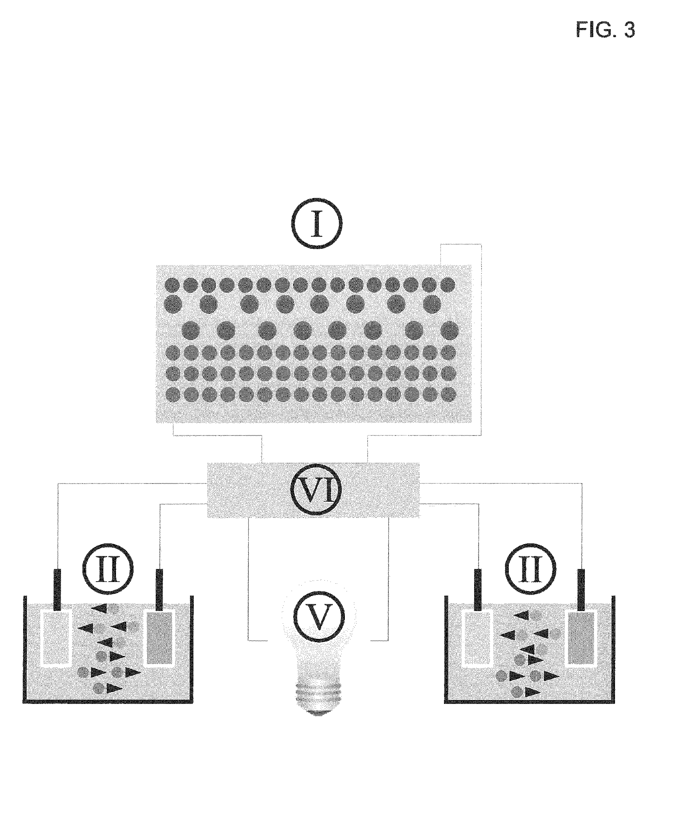

- FIG 3 - Figur 3:: zeigt in schematischer Darstellung den Gegenstand der Erfindung SCCS - Intelligentes stromloses Wiederaufladeverfahren - integriert in den CC Cold Charging Controller [VI] angeschlossen einerseits an ein(e) PV-Zelle / Modul [I], andererseits an eine oder mehrere Speicherbatterie(n) [II] und in Richtung Verbraucher (Last) [V] - der neu-entwickelte CC Cold Charging Controller [VI] ersetzt jeglichen Laderegler nach dem Stand der Technik.
Aufgrund der in Figur 1. I beschriebenen quantendynamischen Ladungsträgerbewegung in der p/n Raumladungszone in PV-Zelle / Modul [I] leitet der CC Cold Charging Controller [VI] ein pulsierendes Erregungssignal im Lademodus an die negativen und positiven sulfatisierten Pole der Speicherbatterie(n) [II] weiter, in dessen Folge an den beiden Polen der Entsulfatisierungsprozess beginnt Das bedeutet, dass in Abhängigkeit des Sulfatisierungsgrades der Pole zwischen beiden ein Ionenwechsel stattfindet, ergo im Elektrolyt Ionenstrom gestartet wird bis die angelagerten Sulfate an beiden Polen gelöst sind.
Der ionische Ladeprozess endet, wenn die beiden Pole vollständig entsulfatisiert sind und der Vollladezustand erreicht ist, woraus sich eine Steigerung des Batteriespannungsniveaus ergibt und eine möglichst hohe Elektrolytdichte erreicht wird. Durch die gestiegenen Werte beider Faktoren stellt sich nach gängigen Normen der Vollladezustand des wiederaufladbaren Batteriespeichers dar. Es hat sich gezeigt, dass durch die Integration des SCCS - Intelligentes stromloses Wiederaufladeverfahren - integriert in den CC Cold Charging Controller [VI] bei gleicher Anzahl verwendeter PV-Module [I] die Menge der gleichzeitig wieder aufladbaren Speicherbatterien [II] zumindest verdoppelt werden konnte.

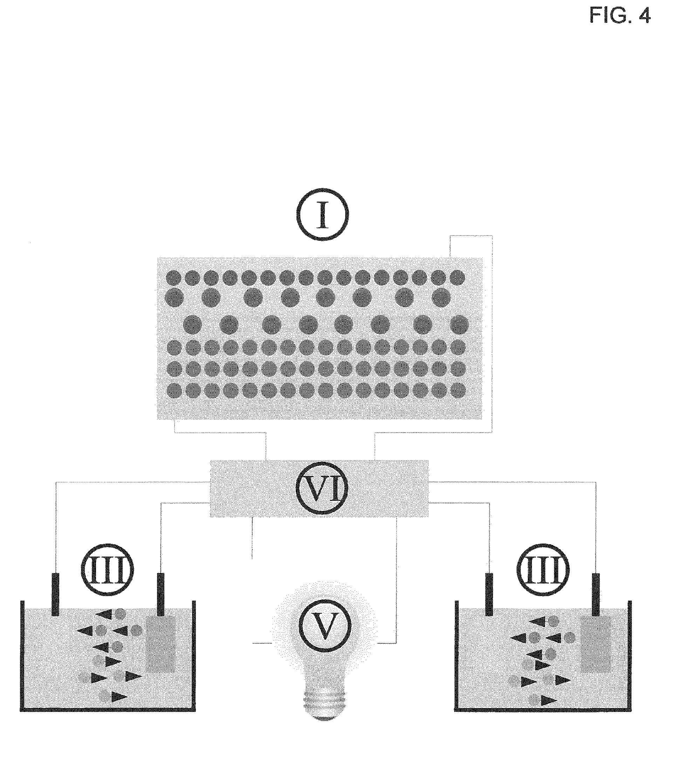

- FIG 4 - Figur 4:: zeigt in schematischer Darstellung eine wieder aufladbaren Speicherbatterie [II] mit Entladungsfunktion in Richtung Last / Verbraucher [5] mittels Elektronenstrom nach dem Stand der Technik ohne direkte Einwirkung des PV Moduls [II].

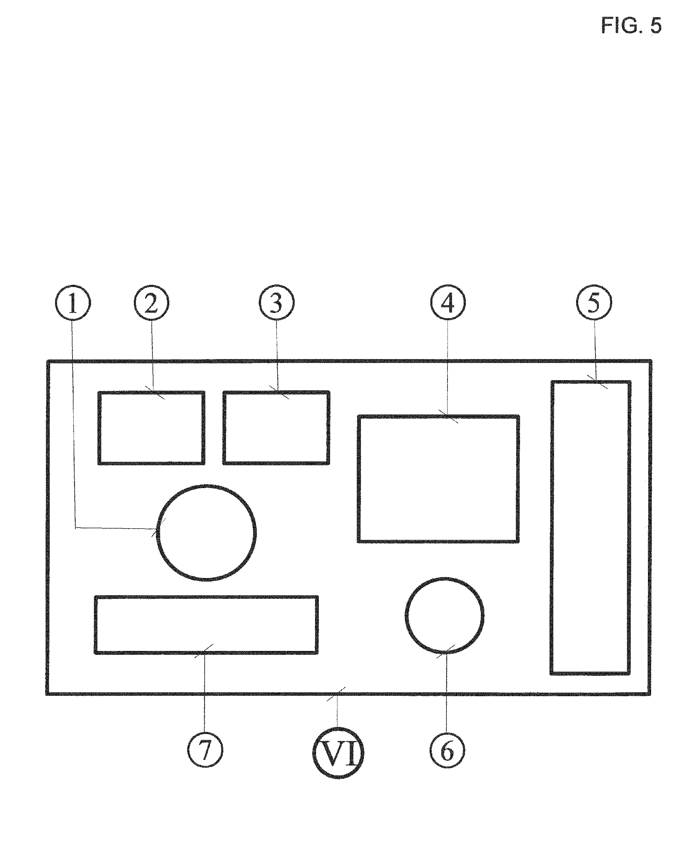

- FIG 5 - Figur 5:: zeigt schematisch den Aufbau von Komponenten in dem CC Cold Charging Controller [VI] mit den Hauptfunktionen RMS - Regelung, Messung, Steuerung.
1: Feldverstärker Quelle
2 + 3: Batterienspannungs-Module
4: Quellenspannungs-Modul
5: Lade/Entlade Steuerungssignale
6: Feldverstärker Batterien
7: Anschlussleiste
Der Funktionsablauf ist wie in FIG 3 und FIG 4 dargestellt.

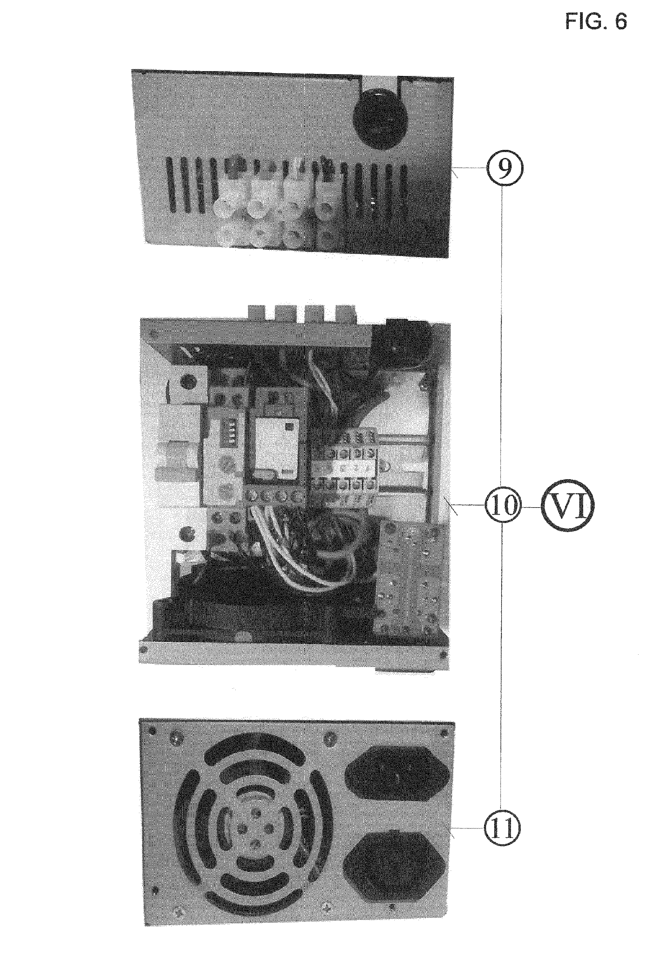

- FIG 6 - Figur 6:: zeigt schematisch den Aufbau von Komponenten in dem CC Cold Charging Controller [VI] durch Ansicht der Rückseite (9), des Grundrisses (10) und der Vorderseite (11).

## Patentansprüche

1. Ein SCCS - intelligentes stromloses Wiederaufladeverfahren - ist **dadurch gekennzeichnet**, das eine stromlose Wiederaufladung in aufladbaren Batteriespeichern durch eine photovoltaische oder thermovoltaische Quelle ermöglicht wird. Dabei entsteht eine mit den durch Energieabsorption von Photonen in photovoltaischen Generatoren und Energieabsorption durch Wärmezufuhr in thermovoltaischen Generatoren in den Raumladungszonen, respektive p/n-Übergängen, ausgelösten Ladungsträgern synchronisierte stromlose Aufladebewegung in dem internen elektrochemischen Prozess in einem oder mehreren Batteriespeichern. Die System-treibende Kraft entsteht in den Raumladungszonen, respektive p/n-Übergängen, wo durch die entsprechend absorbierte Energieform in der jeweiligen Quelle die Ladungsträgerbewegung erzeugt wird.

2. Ein SCCS stromloses Wiederaufladeverfahren ist nach Anspruch 1 **dadurch gekennzeichnet, dass** eine stromlose Wiederaufladung in aufladbaren Batteriespeichern durch eine photovoltaische oder thermovoltaische Quelle ermöglicht wird, in dem sich die ionisierten Ladungsträger, in Form nur positiver Kationen, wie in Lithium-basierten Batteriespeichern, in einer jederzeit umkehrbaren Richtung für die spezifischen Lade- und Entladevorgänge bewegen.

3. Ein SCCS - intelligentes stromloses Wiederaufladeverfahren - ist nach Ansprüchen 1 und 2 **dadurch gekennzeichnet, dass** der CC Cold Charging Controller eine elektronisch-elektrische Vorrichtung ist, welche das SCCS - intelligente stromloses Wiederaufladeverfahren - als Hauptregel-, Mess- und Steuerungseinheit zwischen den Energiequellen und den aufladbaren Speicherbatterien koordiniert.

4. Ein SCCS - intelligentes stromloses Wiederaufladeverfahren - ist nach Ansprüchen 1 bis 3 **dadurch gekennzeichnet, dass** der CC Cold Charging Controller im Belastbetrieb durch einen oder mehrere Verbraucher den zugehörigen Elektronenstromrückfluss zu der photovoltaische Quelle oder der thermovoltaische Quelle unterbindet.

5. Ein SCCS - intelligentes stromloses Wiederaufladeverfahren - ist nach Ansprüchen 1 bis 4 **dadurch gekennzeichnet, dass** unter Beibehaltung ein und derselben photovoltaischen oder thermovoltaischen Quelle, ohne Leistungsminderung, die Anzahl der gleichzeitige angeschlossenen wiederaufladbaren Batteriespeicher zumindest verdoppelt werden kann.

6. Ein SCCS - intelligentes stromloses Wiederaufladeverfahren - ist nach Ansprüchen 1 bis 4 **dadurch gekennzeichnet, dass** der stromlose Wiederaufladevorgang, Strom I=0 Ampere, nicht dem Ohmschen Gesetz unterliegt.

7. Ein SCCS - intelligentes stromloses Wiederaufladeverfahren - ist nach Ansprüchen 1 bis 6 **dadurch gekennzeichnet, dass** der Wiederaufladezeitraum weitaus kürzer ausfällt als bei Strom abhängigen Wiederaufladeanwendungen nach dem Stand der Technik.

8. Ein SCCS - intelligentes stromloses Wiederaufladeverfahren - ist nach Ansprüchen 1 bis 6 **dadurch gekennzeichnet, dass** bei steigender Betriebstemperatur in photovoltaischen Anwendungen eine zusätzliche Wärmeabsorptionsquelle nutzbar gemacht wird und somit zu einer beschleunigten nutzbaren Leistungs- und Leistungstransfersteigerung beiträgt.

9. Ein SCCS - intelligentes stromloses Wiederaufladeverfahren - ist nach Ansprüchen 1 bis 8 **dadurch gekennzeichnet, dass** bei diffusem Licht ein besserer Leistungstransfer von der photovoltaischen Quelle aufgrund der stromlosen Wiederaufladefunktion gegeben ist als dem Stand der Technik in photovoltaischen Anwendungen entspräche.

10. Ein SCCS -intelligentes stromloses Wiederaufladeverfahren - ist nach Ansprüchen 1 bis 7 **dadurch gekennzeichnet, dass** die beim Stand der Technik bestehende Leistungstransferbeeinträchtigung bei Teilschattierung von photovoltaischen Modulen aufgrund der negativen Verschiebung des MPP - Maximum Power Point durch die stromlose Wiederaufladefunktion und die entsprechend synchronisierte ionische Aufladefunktion in den Speicherbatterien beinahe vollständig aufgehoben wird.

11. Ein SCCS - intelligentes stromloses Wiederaufladeverfahren - ist nach Ansprüchen 1 bis 10 **dadurch gekennzeichnet, dass** durch die stromlose Wiederaufladefunktion bei photovoltaischen Generatoren Modulkontaktfehler, Hotspotbildungen bis hin zu möglichen Brandgefahren, welche durch Teilschattierungen entstehen können, unterbunden werden.

12. Ein SCCS - intelligentes stromloses Wiederaufladeverfahren - ist nach Ansprüchen 1 bis 11 **dadurch gekennzeichnet, dass** in den Speicherbatterien eine Aufladung ohne Überspannung ermöglicht wird; Erhitzungs-, Gasungs- und Explosionsgefahren werden unterbunden. Gleiches gilt für Defekte wie Einzelzellenkurzschluss.
